# FASCICULE DE BREVET EUROPEEN

(11) **EP 3 862 233 B1**
(45) Date de publication et mention de la délivrance du brevet: **30.11.2022**
(21) Numéro de dépôt: 21154764.1
(22) Date de dépôt: 02.02.2021
(51) Int. Cl.: B60R 22/02, B60R 22/22, B60N 2/04

(54) **VÉHICULE DOTÉ D'UN SIÈGE PLACÉ DOS À LA ROUTE ET DOTÉ D'UNE CEINTURE DE SÉCURITÉ**
FAHRZEUG MIT EINEM SITZ, DER MIT DEM RÜCKEN ZUR STRASSE ZEIGT UND MIT EINEM SICHERHEITSGURT
VEHICLE WITH A SEAT FACING BACK TO THE ROAD AND EQUIPPED WITH A SEAT BELT

(30) Priorité: 04.02.2020 FR 2001084
(43) Date de publication de la demande: 11.08.2021
(73) Titulaire: Renault s.a.s, 92100 Boulogne Billancourt (FR)
(72) Inventeur: BEZEAULT, LOIC, 78150 LE CHESNAY (FR); HEWAK, GREGOR, 95490 VAUREAL (FR)
(74) Mandataire: Renault Group

(56) Documents cités:
- DE-A1-102016 109 586
- JP-A- 2001 239 921
- JP-A- 2004 330 803

## Description

La présente invention concerne un véhicule doté d'un siège placé dos à la route et doté d'une ceinture de sécurité.

Certains véhicules automobiles comprennent des sièges aptes à passer d'une configuration classique « face à la route » pour laquelle un occupant qui serait assis sur ledit siège pourrait regarder une scène devant le véhicule à une configuration plus originale « dos à la route » pour laquelle ledit occupant pourrait regarder une scène située à l'arrière dudit véhicule. Ces véhicules peuvent par exemple être constitués par des véhicules autonomes, pour lesquels les conducteurs n'ont plus à se soucier de la conduite et pourraient être tentés de discuter avec des occupants assis sur une rangée arrière. Le document JP2004330803 montre un véhicule automobile comprenant un siège passager et une ceinture de sécurité associée au siège passager.

Quelle que soit la configuration du siège, une ceinture de sécurité doit être associée à celui-ci pour empêcher une personne qui serait assise sur ledit siège d'être projetée hors du véhicule lors d'un choc du véhicule contre un obstacle extérieur. La mise en œuvre d'une ceinture de sécurité lorsque le siège est dans une configuration « face à la route » est bien maitrisée. En revanche, il n'est pas toujours simple de concevoir une ceinture de sécurité pour un siège se retrouvant dans une configuration « dos à la route », sans modifier en profondeur la structure du véhicule et sans entraver le passage d'accès audit siège depuis l'extérieur du véhicule.

Un véhicule selon l'invention possède un siège passager apte à être placé dans une configuration « dos à route » et auquel est associée une ceinture de sécurité ne nécessitant pas une modification en profondeur de la structure du véhicule et ne gênant pas l'entrée d'une personne dans le véhicule et désireuse de s'assoir sur ledit siège.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

L'invention a pour objet un véhicule automobile selon la revendication 1 comprenant un siège passager, ledit siège passager étant apte à passer d'une configuration face à la route à une configuration dos à la route et inversement, ledit véhicule comprenant une ceinture de sécurité associée au siège passager dans la configuration dos à la route, ladite ceinture étant dotée d'un pêne et d'un enrouleur.

Selon l'invention, ledit enrouleur est fixé sur un passage de roue avant, et le véhicule comprend un évidement positionné sur un plancher du véhicule à l'arrière de l'enrouleur et à côté du siège, ledit évidement possédant un fond sur lequel sont fixés des moyens d'ancrage du pêne de la ceinture, ledit évidement possédant un volet mobile apte à passer d'une position de fermeture pour laquelle il clôt ledit évidement à une position d'ouverture pour laquelle il permet à un individu qui serait assis sur le siège d'accéder au pêne pour lui permettre de s'accrocher avec la ceinture de sécurité. De cette manière, lorsque le siège se retrouve dans une configuration face à la route, cette ceinture de sécurité prévue pour une configuration du siège dos à la route, est totalement rangée dans l'évidement coiffé par le volet dans la position de fermeture. Quand cette ceinture est rangée dans l'évidement, elle n'est donc pas visible et ne vient donc pas nuire à l'esthétique du véhicule. De plus, elle n'émerge pas du plancher et ne risque donc pas de gêner l'entrée d'une personne dans le véhicule. En effet, cette ceinture étant située à proximité immédiate de la portière placée à côté du siège passager, elle pourrait facilement entraver le passage d'une personne désireuse de pénétrer dans le véhicule si elle n'était pas parfaitement rangée. Avantageusement, l'enrouleur est recouvert par une pièce de garniture de manière à ne pas nuire à l'esthétique du véhicule. Le siège passe d'une configuration face à la route à une configuration dos à la route par tout moyen : basculement du dossier d'une position arrière vers une position avant, rotation du siège de 180°, etc. L'évidement doté de son volet délimite un espace dans lequel est rangée une extrémité de la ceinture comportant le pêne.

Selon une caractéristique possible de l'invention, l'évidement est allongé et s'étend selon un axe longitudinal X du véhicule, le volet étant allongé et étant fixé au plancher de sorte qu'un axe longitudinal dudit volet soit parallèle à un axe longitudinal X du véhicule. De cette manière, l'axe longitudinal X du véhicule matérialise la direction suivant laquelle l'évidement peut être facilement étendu sans empiéter sur des fonctions, des rangements, ou des espaces voisins du siège passager.

Selon une caractéristique possible de l'invention, le volet est monté pivotant sur un axe transversal Y du véhicule situé sur le plancher et dans un bord avant de l'évidement matérialisant une extrémité dudit évidement. Un mouvement en rotation est beaucoup moins consommateur de place qu'un mouvement en translation et est donc parfaitement adapté à un habitacle de véhicule dans lequel les rares espaces disponibles sont peu étendus.

Selon une caractéristique possible de l'invention, dans la position de fermeture, le volet couvre l'évidement en étant dans la continuité du plancher, dans la position d'ouverture ledit volet ayant pivoté d'un angle supérieur ou égal à 90° depuis sa position de fermeture. Lorsque la ceinture n'est pas utilisée elle est rangée sous le plancher du véhicule et le volet, lorsqu'il est dans la position de fermeture, ne doit pas se démarquer du reste du plancher et rappeler qu'une ceinture de sécurité est rangée sous le plancher. Ainsi, malgré la présence du volet dans la position de fermeture, le plancher donne l'impression d'être continu et uniforme, sans présenter la moindre cassure au niveau dudit volet.

Selon une caractéristique possible de l'invention, un renvoi de sangle sous la forme d'un anneau fermé aplati est fixé dans une zone du plancher comprise entre l'évidement et l'enrouleur à l'entrée dudit évidement, pour permettre à la ceinture en provenance de l'enrouleur d'être correctement positionnée avant d'être rangée dans l'évidement. Ce renvoi de sangle qui s'étend préférentiellement selon une direction horizontale lorsque le véhicule repose sur un sol horizontal permet de toujours bien positionner la ceinture à l'entrée de l'évidement, après chaque utilisation. Ce renvoi de sangle agit comme un élément de guidage permettant, de façon répétitive, de toujours bien placer la ceinture en amont de l'évidement.

Selon une caractéristique possible de l'invention, par défaut le volet est verrouillé dans la position de fermeture par des moyens de retenue reliés à un bouton poussoir fixé sur le plancher, une pression exercée sur le bouton poussoir inactivant lesdits moyens et provoquant le déverrouillage du volet afin qu'il puisse être déplacé jusqu'à la position d'ouverture pour accéder au pêne de la ceinture. Ainsi, une personne désireuse d'accéder à la ceinture de sécurité lorsque le siège est dans la configuration dos à la route, appuie simplement sur le bouton pour déverrouiller le volet et l'ouvrir afin de se saisir du pêne de la ceinture. Préférentiellement, un élément de rappel précontraint est associé au bouton-poussoir de sorte que la pression exercée sur le bouton pour déverrouiller le volet doit être supérieure à l'effort produit par ledit élément de rappel. Cet élément de rappel a pour objet de replacer le bouton-poussoir toujours dans la même position de verrouillage.

Selon une caractéristique possible de l'invention, le volet est associé à au moins un moyen de rappel précontraint de sorte que ledit volet se positionne automatiquement dans la position d'ouverture sous l'effet de l'action dudit moyen de rappel lorsqu'une pression est exercée sur le bouton-poussoir. Autrement dit, une simple pression sur le bouton-poussoir non seulement déverrouille le volet mais provoque également un déplacement brusque de celui-ci, soit en rotation, soit en translation, pour le placer dans la position d'ouverture.

Selon une caractéristique possible de l'invention, le moyen de rappel est constitué par deux lames ressort en forme de crochet, lesdites deux lames étant alignées suivant un axe transversal Y du véhicule. Lorsque le volet est dans la position de fermeture il engendre une déformation élastique de ces lames. Lorsque le volet est libéré en mouvement au moyen d'une pression sur le bouton-poussoir, il est brusquement déplacé vers sa position d'ouverture grâce aux deux lames qui se détendent pour retrouver leur position naturelle, sans contrainte.

Selon une caractéristique possible de l'invention, le dossier du siège lorsqu'il est dans une position dos à la route possède un renvoi d'angle situé au droit de l'évidement de sorte qu'une personne désireuse d'utiliser la ceinture se saisit du pêne pour déployer simultanément un premier tronçon qui va passer par le renvoi d'angle puis redescendre sur le dossier pour créer une sangle thoracique, ainsi qu'un deuxième tronçon initialement replié autour d'un anneau terminal fixé dans l'évidement pour constituer une sangle ventrale. Il s'agit d'une ceinture de sécurité trois points.

De cette manière, la ceinture de sécurité est une ceinture trois points. Cette protubérance peut être représentée par une tige, qui peut être rectiligne ou incurvée. Elle joue le rôle d'un renvoi d'angle pour la ceinture de sécurité afin de créer une sangle thoracique.

Selon une caractéristique possible de l'invention, le véhicule comprend une boucle émergeant du plancher et placée du côté gauche du siège à proximité d'un axe longitudinal X et central du véhicule, ladite boucle étant destinée à recevoir le pêne de la ceinture lorsque ladite ceinture est utilisée par un occupant qui serait assis sur le siège. Préférentiellement, cette boucle est spécifique au siège lorsqu'il se retrouve dans la configuration dos à la route, car elle doit respecter une certaine inclinaison. De cette manière, deux boucles ayant des inclinaisons différentes sont associées au siège, l'une prévue pour le siège dans la configuration face à la route, et l'autre prévue pour ledit siège dans la configuration dos à la route.

Un véhicule selon l'invention présente l'avantage de posséder un siège passager ayant une double ceinture de sécurité, l'une prévue pour la configuration face à la route et l'autre prévue pour la configuration dos à la route, la ceinture non utilisée étant rangée pour ne plus être visible. Il a de plus l'avantage de comprendre une ceinture de sécurité spécialement dédiée à la configuration dos à la route du siège passager, qui ne gêne pas le passage d'une personne désireuse de s'asseoir sur le siège passager grâce à une trappe judicieusement positionnée à côté du siège.
[Fig. 1] représente une vue en perspective montrant le siège passager d'un véhicule selon l'invention dans une configuration dos à la route,
[Fig. 2] représente une zone spécifique de la figure 1 dans laquelle apparait une ceinture de sécurité déployée, le volet étant dans une position d'ouverture,
[Fig. 3] représente la zone de la figure 2, pour laquelle la ceinture est rangée et le volet est dans une position de fermeture, un brin de ladite ceinture situé entre l'enrouleur et l'évidement étant visible,
[Fig. 4] représente la zone de la figure 3, le brin et l'enrouleur étant recouvert par une pièce d'habillage,
[Fig. 5] représente une vue en perspective de l'évidement dans lequel est rangée la ceinture de sécurité, le volet étant dans une position d'ouverture,
[Fig. 6] représente une vue en perspective sous un autre angle de l'évidement et du volet de la figure 5

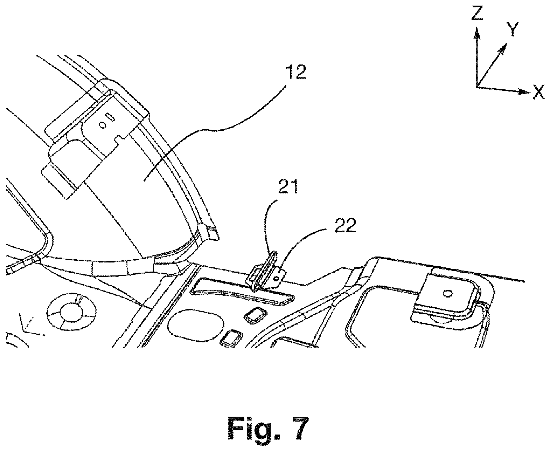

[Fig. 7] représente une vue en perspective d'un renvoi de sangle placé à l'entrée d'un évidement de rangement de la ceinture de sécurité, ledit évidement ayant été artificiellement supprimé pour mieux observer ledit renvoi de sangle.

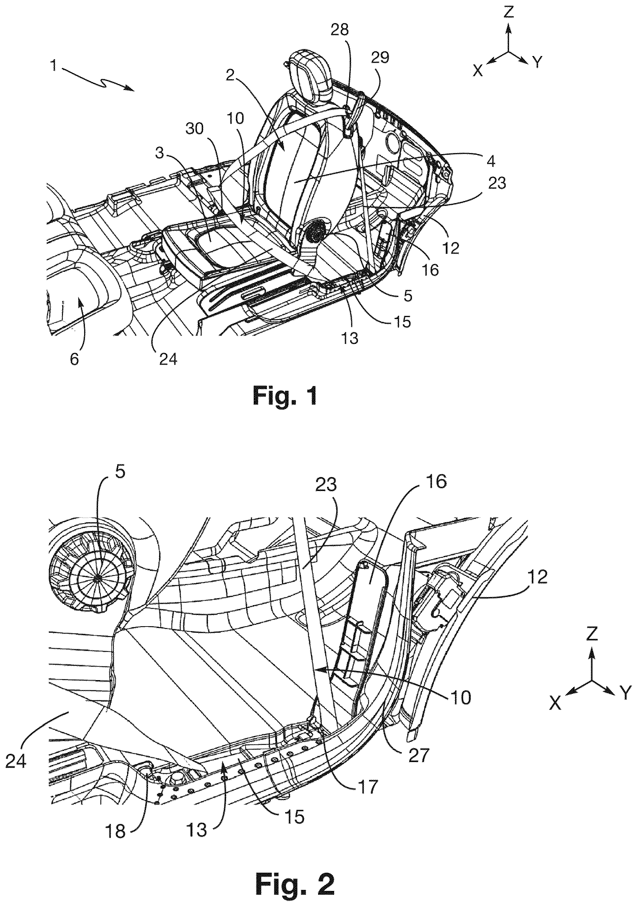

Un véhicule 1 selon l'invention, comprend un siège passager 2 comprenant une assise 3 et un dossier 4, qui est préférentiellement inclinable au moyen d'une poignée rotative 5. Ce siège passager 2 est configuré pour passer d'une configuration « face à la route » pour laquelle un passager qui serait assis sur ledit siège 2 peut visualiser une scène placée devant le véhicule, à une configuration « dos à la route » comme illustré à la figure 1 et pour laquelle ledit passager peut visualiser une scène placée derrière le véhicule. Autrement dit, l'une de ces configurations se déduit de l'autre configuration par une rotation de 180°, plus ou moins 5° pour tenir compte des tolérances de montage du siège 2 dans le véhicule 1. Le passage d'une configuration « face à la route » à une configuration « dos à la route » peut s'effectuer de différentes manières, comme par exemple au moyen d'une translation du dossier 4 de l'arrière de l'assise 3 vers l'avant de celle-ci, ou au moyen d'une rotation de 180° dudit siège 2 autour d'un axe vertical. Lorsque le siège 2 est dans la configuration dos à la route, le passager qui est assis sur ledit siège 2, fait face à des occupants qui seraient assis sur une rangée arrière 6 de sièges.

Or, que le siège passager 2 soit dans la configuration face à la route ou dans la configuration dos à la route, il doit être associé à une ceinture de sécurité 10, pour empêcher un passager qui serait assis sur ledit siège 2, d'être éjecté du véhicule 1 lors d'un choc accidentel dudit véhicule contre un obstacle extérieur.

Dans un véhicule 1 selon l'invention, le siège passager 2 est associé à une première ceinture de sécurité pour la configuration face à la route, et à une deuxième ceinture de sécurité 10 pour la configuration dos à la route, lesdites deux ceintures 10 étant distinctes et utilisées alternativement en fonction de la configuration du siège passager 2.

Pour la suite de la description, seule la deuxième ceinture de sécurité 10 sera décrite en détail, et sera simplement dénommée « la ceinture de sécurité ».

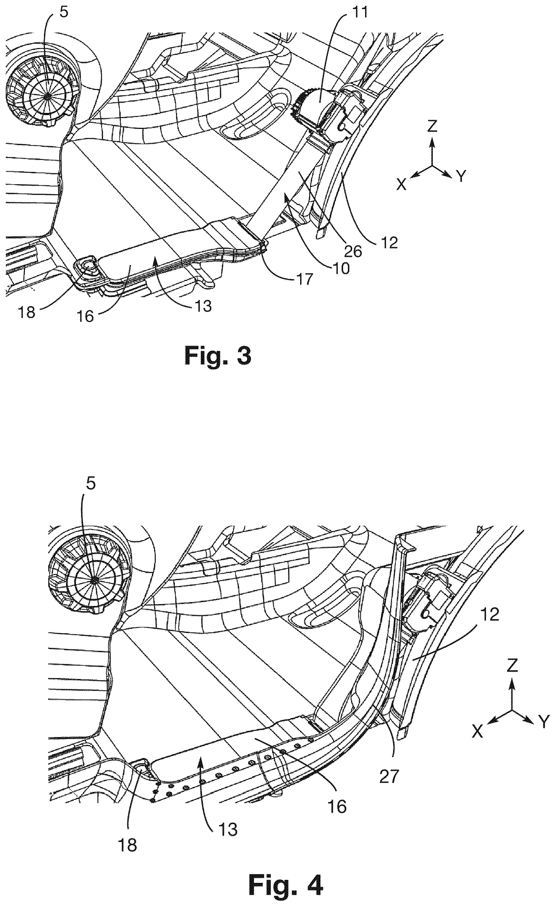

En se référant à la figure 3, la ceinture de sécurité 10 comprend un enrouleur 11 fixé sur un passage 12 de roue avant droit du véhicule 1 et une trappe 13 permettant de ranger une extrémité de la ceinture 10 se terminant par un pêne 14. Cette trappe 13 est située derrière l'enrouleur 11 en étant alignée avec celui-ci suivant un axe longitudinal X du véhicule 1, ledit enrouleur 11 étant surélevé par rapport à ladite trappe 13. Cette trappe 13 se retrouve intercalée entre une portière du véhicule 2 permettant d'accéder au siège passager 2 lorsque celui-ci est dans la configuration face à la route, et ledit siège passager 2.

En se référant aux figures 2, 3, 4, 5 et 6, la trappe 13 est allongée et s'étend suivant un axe longitudinal X du véhicule 1. Elle comprend un évidement allongé 15 de forme sensiblement rectangulaire, et un volet 16 allongé également de forme sensiblement rectangulaire. Le volet 16 est monté pivotant sur un axe de rotation 17 solidarisé au plancher et qui est parallèle à un axe transversal Y du véhicule 1. Cet axe de rotation 17 est placé à proximité immédiate d'un bord avant de l'évidement 15 s'étendant suivant un axe transversal Y du véhicule 1. De cette manière, le volet 16 est apte à passer d'une position de fermeture pour laquelle il recouvre intégralement l'évidement 15 comme illustré aux figures 3 et 4, à une position d'ouverture pour laquelle il a pivoté vers l'avant autour de l'axe de rotation 17, d'un angle supérieur ou égal à 90° comme illustré aux figures 1, 2, 5 et 6. Les dimensions du volet 16 sont légèrement supérieures à celles de l'évidement 15 si bien que dans la position de fermeture ledit volet 16 recouvre totalement l'évidement 15 sans laisser subsister de jour avec celui-ci. Il est à noter que dans la position de fermeture qui est notamment visible sur les figures 3 et 4, le volet 16 arase le plancher de façon à le prolonger idéalement, sans créer la moindre cassure avec celui-ci. De cette manière, le volet 16 se fond dans le véhicule sans attirer l'attention et donc sans dégrader le rendu visuel dudit véhicule 1. Malgré la présence du volet 16, le plancher donne l'impression d'être continu.

Dans la position de fermeture, le volet 16 est maintenu contre une paroi délimitant l'évidement 15 par le biais d'une interaction entre des moyens de retenue dudit volet 16 avec des moyens de retenue complémentaires fixés à ladite paroi.

Un bouton-poussoir 18 placé dans une zone arrière de la paroi délimitant l'évidement 15, permet par défaut d'assurer ladite interaction. Une pression manuelle exercée sur ledit bouton-poussoir 18 permet de supprimer cette interaction, provoquant alors un brusque pivotement dudit volet 16 jusqu'à la position d'ouverture. En effet, le volet 16 est associé à un moyen de rappel précontraint, pouvant par exemple être des lames ressort 19, 20 placées à proximité de l'axe de rotation 17, qui est comprimé par le volet 16 lorsque celui-ci est dans la position de fermeture. Une pression sur le bouton-poussoir 18 supprime l'interaction entre des moyens de retenue et les moyens de retenue complémentaires. Le volet 16, qui est alors libéré en mouvement vient brusquement se positionner dans la position d'ouverture sous l'effet du moyen de rappel 19, 20 qui se détend en reprenant sa position originelle sans contrainte.

Une fois que le volet 16 est dans la position d'ouverture, la personne qui est assise sur le siège 2 peut alors se saisir du pêne de la ceinture 10 pour déployer ladite ceinture 10 et ainsi pouvoir s'attacher sur le siège 2.

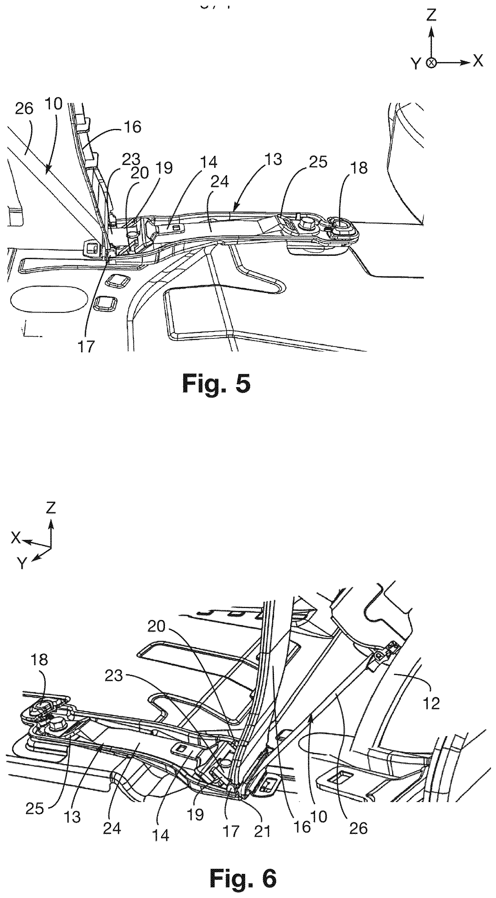

En se référant aux figures 5 et 6, un renvoi de sangle 21 est fixé au plancher juste devant l'axe de rotation 17 du volet 16, c'est-à-dire à l'extérieur de l'évidement 15. Ce renvoi de sangle 21 se présente sous la forme d'un anneau fermé qui aurait été écrasé. Autrement dit, le renvoi de sangle 21 présente deux segments parallèles et allongés, reliés à leurs extrémités par deux segments incurvés plus courts. Ce renvoi de sangle 21 possède un support de fixation 22 plan et ajouré permettant de fixer ledit renvoi de sangle 21 au plancher au moyen d'au moins une vis. Une fois que ce renvoi de sangle 21 a été fixé au plancher par l'intermédiaire de ce support de fixation 22, il s'inscrit dans un plan transversal et vertical YZ du véhicule, chacun des deux segments allongés s'étendant suivant un axe transversal Y et horizontal du véhicule 1. Ce renvoi de sangle 21 est placé devant le volet 16 de façon à ne pas entraver la mise en rotation dudit volet 16 entre la position de fermeture et la position d'ouverture. Ce renvoi de sangle 21 sert au passage de la ceinture de sécurité 10 en provenance de l'enrouleur 11. En effet, la ceinture de sécurité 10 est montée dans le véhicule, de sorte que la sangle en provenance de l'enrouleur 11 passe d'abord par le renvoi de sangle 21 avant que son extrémité dotée du pêne ne pénètre dans l'évidement 15. Ce renvoi de sangle 21, qui permet de systématiquement repositionner correctement la ceinture de sécurité 10 en amont de l'évidement 15, sert d'organe de guidage et de positionnement de la ceinture 10.

En se référant aux figures 5 et 6, le pêne 14 de la ceinture 10 joint un premier tronçon 23 de ladite ceinture 10 qui est directement en provenance de l'enrouleur 11 et un deuxième tronçon 24 qui fait une boucle autour d'un anneau terminal 25 qui est fixé dans l'évidement 15, à une extrémité de celui-ci qui est opposée à celle par laquelle la ceinture de sécurité 10 en provenance de l'enrouleur 11 pénètre dans ledit évidement 15. Lorsque le pêne 14 est rangé dans l'évidement 15 sous l'effet de l'effort de traction exercé par l'enrouleur 11, il se retrouve dans une zone de l'évidement 15 qui est située à proximité de l'extrémité dudit évidement 15 par lequel pénètre la ceinture dans l'évidement 15.

En se référant aux figures 3, 5, et 6, lorsque le pêne 14 de la ceinture de sécurité 10 est rangé dans l'évidement 15, une portion 26 de ladite ceinture 10 reliant l'enrouleur 11 et ledit rangement 15 devrait être toujours visible.

En se référant à la figure 4, afin de masquer l'enrouleur 11 et la portion 26 visible de la ceinture de sécurité 10 située entre cet enrouleur 11 et ce rangement 15, une pièce d'habillage 27 masque ledit enrouleur 11 et ladite portion 26 afin de ne pas nuire à l'esthétique du véhicule 1.

En se référant à la figure 1, un renvoi d'angle 28 est placé à proximité d'une poignée 29 du dossier 4.

Une personne assise sur le siège 2 dans la configuration dos à la route, et désireuse de se sangler sur celui-ci effectue les étapes suivantes :
- elle exerce une pression sur le bouton-poussoir 18 afin de libérer le volet 16, qui passe instantanément de la position de fermeture à la position d'ouverture sous l'effet des deux lames ressort 19, 20 précontraintes qui se relâchent,
- elle se saisit du pêne 14 de la ceinture 10 puis le sort de l'évidement 15 en l'attirant vers elle, entrainant le déploiement du premier tronçon 23 et du deuxième tronçon 24 de ladite ceinture. Le déploiement du premier tronçon 23 s'effectue depuis l'endroit où est rangé le pêne 14 dans l'évidement 15 et le déploiement du deuxième tronçon 24 s'effectue depuis l'anneau terminal 25. La ceinture se déploie donc en deux points distincts de l'évidement 15.
- elle fait passer le premier tronçon 23 déployé par le renvoi d'angle 28 du dossier 4 puis la fait ensuite redescendre pour créer une sangle thoracique sur le siège 2, tandis que le deuxième tronçon 24 est étiré directement pour créer une sangle ventrale. Le déploiement du premier 23 et du deuxième tronçon 24 s'effectue par le biais d'un effort de traction exercé sur le pêne 14, pour l'amener dans une boucle 30 située de l'autre côté du siège 2. Cette boucle 30 est distincte de celle utilisée lorsque le siège 2 est dans la configuration face à la route, pour respecter une certaine inclinaison de ladite boucle 30 qui doit être différente suivant la configuration du siège 2.

Lorsque la personne est désireuse d'utiliser le siège 2 dans une configuration face à la route, elle se déboucle puis range le pêne 14 de la ceinture 10 dans l'évidement 15 avant de refermer le volet 16 sur ledit évidement 15. Elle place son siège 2 dans la configuration face à la route puis utilise une autre ceinture de sécurité qui est spécifiquement adaptée à la configuration face à la route.

## Revendications

1. Véhicule (1) automobile comprenant un siège passager (2), ledit siège passager (2) étant apte à passer d'une configuration face à la route à une configuration dos à la route et inversement, ledit véhicule (1) comprenant une ceinture de sécurité (10) associée au siège passager (2) dans la configuration dos à la route, ladite ceinture (10) étant dotée d'un pêne (14) et d'un enrouleur (11), ledit enrouleur (11) étant fixé sur un passage de roue (12) avant, le véhicule comprenant un évidement (15) positionné sur un plancher du véhicule (1) à l'arrière de l'enrouleur (11) et à côté du siège (2), ledit évidement (15) possédant un fond sur lequel sont fixés des moyens d'ancrage du pêne (14) de la ceinture (10), ledit évidement (15) possédant un volet mobile (16) apte à passer d'une position de fermeture pour laquelle il clôt ledit évidement (15) à une position d'ouverture pour laquelle il permet à un individu qui serait assis sur le siège (2) d'accéder au pêne (14) pour lui permettre de s'accrocher avec la ceinture de sécurité (10).

2. Véhicule selon la revendication 1, **caractérisé en ce que** l'évidement (15) est allongé et s'étend selon un axe longitudinal X du véhicule, et **en ce que** le volet (16) est allongé et est fixé au plancher de sorte qu'un axe longitudinal dudit volet (16) soit parallèle à un axe longitudinal X du véhicule (1).

3. Véhicule selon l'une quelconque des revendications 1 ou 2, **caractérisé en ce que** le volet (16) est monté pivotant sur un axe de rotation (17) transversal Y du véhicule (1) situé sur le plancher et dans un bord avant de l'évidement (15) matérialisant une extrémité dudit évidement (15).

4. Véhicule selon la revendication 3, **caractérisé en ce que** dans la position de fermeture le volet (16) couvre l'évidement (15) en étant dans la continuité du plancher, et **en ce que** dans la position d'ouverture ledit volet (16) a pivoté d'un angle supérieur ou égal à 90° depuis sa position de fermeture.

5. Véhicule selon l'une quelconque des revendications 3 ou 4, **caractérisé en ce qu'**un renvoi de sangle (21) sous la forme d'un anneau fermé aplati est fixé dans une zone du plancher comprise entre l'évidement (15) et l'enrouleur (11) à l'entrée dudit évidement (15), pour permettre à la ceinture (10, 23) en provenance de l'enrouleur (11) d'être correctement positionnée avant d'être rangée dans l'évidement (15).

6. Véhicule selon l'une quelconque des revendications 1 à 5, **caractérisé en ce que** par défaut le volet (16) est verrouillé dans la position de fermeture par des moyens de retenue reliés à un bouton poussoir (18) fixé sur le plancher, et **en ce qu'**une pression exercée sur le bouton poussoir (18) inactive lesdits moyens et provoque le déverrouillage du volet (16) afin qu'il puisse être déplacé jusqu'à la position d'ouverture pour accéder au pêne (14) de la ceinture (10).

7. Véhicule selon la revendication 6, **caractérisé en ce que** le volet est associé à au moins un moyen de rappel (19, 20) précontraint de sorte que ledit volet (16) se positionne automatiquement dans la position d'ouverture sous l'effet de l'action dudit moyen de rappel (19, 20) lorsqu'une pression est exercée sur le bouton-poussoir (18).

8. Véhicule selon la revendication 7, **caractérisé en ce que** le moyen de rappel est constitué par deux lames ressort (19, 20) en forme de crochet, et **en ce que** lesdites deux lames (19, 20) sont alignées suivant un axe transversal Y du véhicule

9. Véhicule selon l'une quelconque des revendications 1 à 8, **caractérisé en ce que** le dossier (4) du siège (2) lorsqu'il est dans une position dos à la route possède un renvoi d'angle (28) situé au droit de l'évidement (15) de sorte qu'une personne désireuse d'utiliser la ceinture (10) se saisit du pêne (14) pour déployer simultanément un premier tronçon (23) qui va passer par le renvoi d'angle (28) puis redescendre sur le dossier (4) pour créer une sangle thoracique, ainsi qu'un deuxième tronçon (24) initialement replié autour d'un anneau terminal fixé dans l'évidement (15) pour constituer une sangle ventrale.

10. Véhicule selon l'une quelconque des revendications 1 à 9, **caractérisé en ce qu'**il comprend une boucle (30) émergeant du plancher et placée du côté gauche du siège (2) à proximité d'un axe longitudinal X et central du véhicule (1), et **en ce que** ladite boucle (30) est destinée à recevoir le pêne (14) de la ceinture (10) lorsque ladite ceinture (10) est utilisée par un occupant qui serait assis sur le siège (2).

## Patentansprüche

1. Kraftfahrzeug (1) mit einem Fahrgastsitz (2), wobei der Fahrgastsitz (2) geeignet ist, von einer Konfiguration mit dem Gesicht zur Fahrtrichtung zu einer Konfiguration mit dem Rücken zur Fahrtrichtung zu wechseln, wobei das Fahrzeug (1) einen Sicherheitsgurt (10) aufweist, der dem Fahrgastsitz (2) in der Konfiguration mit dem Rücken zur Fahrtrichtung zugeordnet ist, wobei der Gurt (10) mit einem Riegel (14) und einem Aufroller (11) versehen ist, wobei der Aufroller (11) an einem vorderen Radkasten (12) befestigt ist, wobei das Fahrzeug eine Aussparung (15) aufweist, die auf einem Boden des Fahrzeugs (1) hinter dem Aufroller (11) und neben dem Sitz (2) positioniert ist, wobei die Aussparung (15) einen Boden besitzt, an dem Mittel zur Verankerung des Riegels (14) des Gurts (10) befestigt sind, wobei die Aussparung (15) eine bewegliche Klappe (16) aufweist, die geeignet ist, von einer geschlossenen Position, in der sie die Aussparung (15) verschließt, in eine offene Position bewegt zu werden, in der sie einer Person, die auf dem Sitz (2) sitzen würde, den Zugang zum Riegel (14) ermöglicht, damit sie sich mit dem Sicherheitsgurt (10) einhaken kann.

2. Fahrzeug nach Anspruch 1, **dadurch gekennzeichnet, dass** die Aussparung (15) länglich ist und sich entlang einer Längsachse X des Fahrzeugs erstreckt und dass die Klappe (16) länglich ist und so am Boden befestigt ist, dass eine Längsachse der Klappe (16) parallel zu einer Längsachse X des Fahrzeugs (1) verläuft.

3. Fahrzeug nach einem der Ansprüche 1 oder 2, **dadurch gekennzeichnet, dass** die Klappe (16) schwenkbar auf einer Querdrehachse (17) Y des Fahrzeugs (1) montiert ist, die sich auf dem Boden und in einer Vorderkante der Aussparung (15) befindet, die ein Ende der Aussparung (15) materialisiert.

4. Fahrzeug nach Anspruch 3, **dadurch gekennzeichnet, dass** in der geschlossenen Position die Klappe (16) die Aussparung (15) abdeckt, indem sie sich in der Kontinuität des Bodens befindet, und dass in der geöffneten Position die Klappe (16) um einen Winkel größer oder gleich 90° aus ihrer geschlossenen Position geschwenkt ist.

5. Fahrzeug nach einem der Ansprüche 3 oder 4, **dadurch gekennzeichnet, dass** ein Gurtumlenker (21) in Form eines abgeflachten geschlossenen Rings in einem Bereich des Bodens zwischen der Aussparung (15) und dem Aufroller (11) am Eingang der Aussparung (15) befestigt ist, damit der Gurt (10, 23) vom Aufroller (11) kommend vor dem Verstauen in der Aussparung (15) richtig positioniert werden kann.

6. Fahrzeug nach einem der Ansprüche 1 bis 5, **dadurch gekennzeichnet, dass** die Klappe (16) standardmäßig in der geschlossenen Position durch Haltemittel verriegelt ist, die mit einem am Boden befestigten Druckknopf (18) verbunden sind, und dass durch einen auf den Druckknopf (18) ausgeübten Druck diese Mittel inaktiviert werden und die Entriegelung der Klappe (16) bewirkt wird, damit sie in die geöffnete Position bewegt werden kann, um Zugang zum Riegel (14) des Gurtes (10) zu erhalten.

7. Fahrzeug nach Anspruch 6, **dadurch gekennzeichnet, dass** die Klappe mit mindestens einem vorgespannten Rückstellmittel (19, 20) verbunden ist, so dass sich die Klappe (16) unter der Kraftwirkung des Rückstellmittels (19, 20) automatisch in die geöffnete Position positioniert, wenn ein Druck auf den Druckknopf (18) ausgeübt wird.

8. Fahrzeug nach Anspruch 7, **dadurch gekennzeichnet, dass** das Rückstellmittel aus zwei hakenförmigen Blattfedern (19, 20) besteht, und dass die beiden Blattfedern (19, 20) entlang einer Querachse Y des Fahrzeugs ausgerichtet sind.

9. Fahrzeug nach einem der Ansprüche 1 bis 8, **dadurch gekennzeichnet, dass** die Rückenlehne (4) des Sitzes (2), wenn er sich in einer Position mit dem Rücken zur Fahrtrichtung befindet, einen Eckumlenker (28) besitzt, der sich rechts von der Aussparung (15) befindet, so dass eine Person, die den Gurt (10) benutzen möchte, den Riegel (14) ergreift, um gleichzeitig ein erstes Teilstück (23) zu entfalten, das durch den Eckumlenker (28) verläuft und dann wieder auf die Rückenlehne (4) herunterläuft, um einen Brustgurt zu bilden, sowie ein zweites Teilstück (24), das anfänglich um einen in der Aussparung (15) befestigten Endring gefaltet ist, um einen Bauchgurt zu bilden.

10. Fahrzeug nach einem der Ansprüche 1 bis 9, **dadurch gekennzeichnet, dass** es ein Schloss (30) aufweist, das aus dem Boden herausragt und auf der linken Seite des Sitzes (2) in der Nähe einer Längsachse X und der Mitte des Fahrzeugs (1) angeordnet ist, und dass das Schloss (30) dazu bestimmt ist, den Riegel (14) des Gurts (10) aufzunehmen, wenn der Gurt (10) von einem Insassen benutzt wird, der auf dem Sitz (2) sitzen würde.

## Claims

1. Motor vehicle (1) comprising a passenger seat (2), said passenger seat (2) being able to switch from a configuration facing the road to a configuration facing back to the road and vice versa, said vehicle (1) comprising a seatbelt (10) associated with the passenger seat (2) in the back-to-the-road-configuration, said belt (10) being provided with a bolt (14) and a winder (11), said winder (11) being fixed to a front wheel arch (12), the vehicle comprising a recess (15) positioned on a floor of the vehicle (1) behind the winder (11) and alongside the seat (2), said recess (15) having a bottom to which are fixed means for anchoring the bolt (14) of the belt (10), said recess (15) having a movable flap (16) that can swich from a position of closure for which it closes said recess (15) to a position of opening for which it allows an individual seated on the seat (2) to access the bolt (14) to allow him or her to hook on to the seatbelt (10).

2. Vehicle according to Claim 1, **characterized in that** the recess (15) is elongate and extends along a longitudinal axis X of the vehicle, and **in that** the flap (16) is elongate and is fixed to the floor in such a way that a longitudinal axis of said flap (16) is parallel to a longitudinal axis X of the vehicle (1).

3. Vehicle according to either one of Claims 1 and 2, **characterized in that** the flap (16) is pivotingly mounted on a transverse rotation axis (17) Y of the vehicle (1) situated on the floor and in a front edge of the recess (15) representing an end of said recess (15).

4. Vehicle according to Claim 3, **characterized in that**, in the position of closure, the flap (16) covers the recess (15) by being in continuity with the floor, and **in that**, in the position of opening, said flap (16) has pivoted by an angle greater than or equal to 90° from its position of closure.

5. Vehicle according to either one of Claims 3 and 4, **characterized in that** a return strap (21) in the form of a flattened closed ring is fixed in a zone of the floor lying between the recess (15) and the winder (11) at the entry of said recess (15), to allow the belt (10, 23) from the winder (11) to be correctly positioned before being stowed in the recess (15).

6. Vehicle according to any one of Claims 1 to 5, **characterized in that**, by default, the flap (16) is locked in the position of closure by retaining means linked to a push button (18) fixed to the floor, and **in that** a pressure exerted on the push button (18) deactivates said means and provokes the unlocking of the flap (16) in order for it to be able to be displaced to the position of opening to access the bolt (14) of the belt (10).

7. Vehicle according to Claim 6, **characterized in that** the flap is associated with at least one return means (19, 20) that is prestressed in such a way that said flap (16) is positioned automatically in the position of opening under the effect of the action of said return means (19, 20) when a pressure is exerted on the push button (18).

8. Vehicle according to Claim 7, **characterized in that** the return means consists of two spring leaves (19, 20) in hook form, and **in that** said two leaves (19, 20) are aligned along a transverse axis Y of the vehicle.

9. Vehicle according to any one of Claims 1 to 8, **characterized in that** the backrest (4) of the seat (2) when it is in a position facing back to the road has an angular member (28) situated in line with the recess (15) in such a way that a person wishing to use the belt (10) grasps the bolt (14) to simultaneously deploy a first section (23) which goes through the angular member (28) then drops back over the backrest (4) to create a thoracic strap, and a second section (24) initially folded back around a terminal ring fixed in the recess (15) to constitute a ventral strap.

10. Vehicle according to any one of Claims 1 to 9, **characterized in that** it comprises a loop (30) emerging from the floor and placed on the left side of the seat (2) in proximity to a longitudinal axis X and central to the vehicle (1), and **in that** said loop (30) is intended to receive the bolt (14) of the belt (10) when said belt (10) is used by an occupant seated on the seat (2).
